# EUROPÄISCHE PATENTSCHRIFT

(11) **EP 2 945 262 B1**
(45) Veröffentlichungstag und Bekanntmachung des Hinweises auf die Patenterteilung: **22.09.2021**
(21) Anmeldenummer: 14168261.7
(22) Anmeldetag: 14.05.2014
(51) Int. Cl.: H02K 1/30, H02K 1/32, H02K 9/197, H02K 5/20

(54) **Elektrische Maschine**
Electric machine
Machine électrique

(43) Veröffentlichungstag der Anmeldung: 18.11.2015
(60) Teilanmeldung: 21163086.8
(73) Patentinhaber: Traktionssysteme Austria GmbH, 2351 Wiener Neudorf (AT)
(72) Erfinder: Neudorfer, Harald, 2514 Traiskirchen (AT)
(74) Vertreter: SONN Patentanwälte OG

(56) Entgegenhaltungen:
- EP-A2- 1 248 349
- WO-A1-2012/044177
- DE-A1- 10 122 425
- FR-A1- 2 863 787
- JP-A- 2004 194 498
- US-A- 5 744 880
- None

## Beschreibung

Die Erfindung betrifft eine gekapselte, elektrische Maschine mit einem in einem Gehäuserohr angeordneten Stator mit einem Statorblechpaket mit einer Statorwicklung und mit Kühlkanälen zur Führung eines Kühlfluids, und mit einem Rotor mit einem mit einer Rotorwelle drehfest verbundenen Rotorblechpaket und darin angeordneten Permanentmagneten oder Kurzschlußstäben, und mit beiderseits angeordneten Lagerschilden, welche über entsprechende Lager mit der Rotorwelle verbunden sind, wobei am Rotor ein Ventilator vorgesehen ist, und im Rotorblechpaket Kühlkanäle angeordnet sind, welche mit entsprechenden Rückleitungen in Verbindung stehen.

Derartige gekapselte und gekühlte elektrische Maschinen können sowohl im Motorbetrieb als auch im Generatorbetrieb angewendet werden. Beispielsweise werden solche elektrischen Maschinen als Generator bei Hochleistungslokomotiven eingesetzt um kurze Strecken ohne Oberleitung überbrücken zu können. Dabei wird mithilfe eines kleinen Dieselmotors der Rotor des Generators in Drehung versetzt, welcher den Strom für den normalen Hauptantrieb der Lokomotive erzeugt. Dabei steht für den Generator meist relativ wenig Platz zur Verfügung, wodurch auch die notwendige Kühlung des Generators erschwert wird. Üblicherweise wird der Rotor der als Generator arbeitenden elektrischen Maschine luftgekühlt und der Stator mithilfe eines doppelwandigen Gehäuses flüssigkeitsgekühlt. Der Doppelmantel im Stator bzw. die Löcher zur Führung der Kühlflüssigkeit erhöhen den thermischen Widerstand des Stators und verschlechtern die Abfuhr der im Rotor der elektrischen Maschine erzeugten Wärme.

Beispielsweise beschreibt die WO 2012/044177 A1 eine gekapselte permanentmagneterregte elektrische Maschine, bei der ein geschlossener Kühlluftstrom sowohl den Rotor als auch den Stator kühlt. Die Kühlluft wird durch eigene Ventilatoren, welche nicht mit der Rotorwelle der elektrischen Maschine drehfest verbunden sind, in Bewegung versetzt.

Die JP 2004-194498 A zeigt eine gekühlte elektrische Maschine bei der die Kühlluft über Lufteinlässe angesaugt und Luftauslässe abgegeben wird. Derartige nicht gekapselte elektrische Maschinen sind für bestimmte Anwendungen, darunter auch Antriebsmotoren, nicht geeignet.

Die Aufgabe der vorliegenden Erfindung besteht in der Schaffung einer oben genannten elektrischen Maschine, welche trotz beschränkter Platzverhältnisse optimal gekühlt werden kann, sodass bei gleicher Baugröße der elektrischen Maschine eine höhere Leistung bzw. eine kleinere Baugröße bei gleicher Leistung erzielt werden kann. Nachteile bekannter derartiger elektrischer Maschinen sollen vermieden oder zumindest reduziert werden.

Gelöst wird die erfindungsgemäße Aufgabe dadurch, dass zwischen der Rotorwelle und dem Rotorblechpaket ein von Rotorscheiben begrenztes Rotorrohr mit einem Hohlraum angeordnet ist, welches Rotorrohr über radial angeordnete Stege mit dazwischen gebildeten Öffnungen mit einer auf der Rotorwelle angeordneten Rotornabe verbunden ist, und die Öffnungen die Rückleitungen für den Kühlluftstrom bilden, und Luftleitelemente zur Trennung des Kühlluftstroms vom Stator vorgesehen sind, sodass getrennt von der Kühlung des Stators ein geschlossener zweiter Kühlluftstrom über das Lagerschild, welches auf der dem Ventilator gegenüberliegenden axialen Seite des Rotors angeordnet ist, gebildet ist, und an der dem Rotor zugewandten Seite des Lagerschilds, welches auf der dem Ventilator gegenüberliegenden axialen Seite des Rotors angeordnet ist, mehrere in regelmäßigen Winkelabständen zueinander angeordnete Kühlrippen an der dem Rotor zugewandten Seite des Lagerschilds innerhalb des Kühlluftstroms angeordnet sind. Durch diese Merkmale wird eine Luftkühlung des Rotors der elektrischen Maschine erzielt, welche von der Kühlung des Stators thermisch entkoppelt ist. Durch eine derartige Bauform kann eine optimale Rückführung der Kühlluft zur Kühlung des Rotors erzielt werden. Darüber hinaus kann die Masse des Rotors durch die Hohlräume im Rotorrohr reduziert werden, was sich wiederum auf das Verhältnis elektrisch abgegebener Leistung zu Masse der elektrischen Maschine positiv auswirkt. Auf diese Weise kann die Rückführung des Kühlluftstroms innerhalb des Rotors bei gleichzeitiger Materialeinsparung für den Rotor erzielt werden. Somit können der Stator und der Rotor der elektrischen Maschine auf unterschiedliche Temperaturen ausgelegt werden und nicht die gesamte elektrische Maschine auf die niedrigere Temperatur berechnet werden. Durch die Luftleitelemente wird die Trennung bzw. thermische Entkopplung der Rotorkühlung und Statorkühlung erzielt. Die Luftleitelemente können durch nachträglich an der elektrischen Maschine angebrachte Bleche oder bereits in gusstechnisch hergestellten Teilen der elektrischen Maschine vorgesehen sein. Dadurch dass die Wärme des Rotors über die Lagerschilde abgeführt wird, kann durch den Wegfall von Kühlkanälen für Kühlluft im Stator der thermische Widerstand des Stators reduziert werden und in der Folge eine elektrische Maschine gleicher Leistung in geringerer Baugröße oder eine elektrische Maschine gleicher Baugröße mit höherer Leistung erzielt werden. Insbesondere beim Verwenden der elektrischen Maschine als Generator für die Erzeugung eines Stroms für die Antriebsmaschine bei Lokomotiven für kurze Strecken ohne Oberleitung (sogenannter last mile generator) eignet sich eine derartig gekühlte elektrische Maschine besonders. Die Größe der Kühlrippen muss entsprechend der notwendigen Wärmeabgabe dimensioniert werden. Erfindungsgemäss sind mehrere in regelmäßigen Winkelabständen zueinander angeordnete Kühlrippen an der dem Rotor zugewandten Seite des Lagerschilds, welches auf der dem Ventilator gegenüberliegenden axialen Seite des Rotors angeordnet ist, innerhalb des Kühlluftstroms angeordnet. Somit wird der geschlossene Kühlluftstrom für die Kühlung des Rotors optimal an den Kühlrippen des Lagerschilds vorbeigeführt und somit die im Kühlluftstrom enthaltene Wärme über das Lagerschild abgeführt.

Zur Verbesserung der Abführung der Wärme des Kühlluftstroms des Rotors können in besagtem, Kühlrippen aufweisenden Lagerschild Kühlkanäle zur Führung eines Kühlfluids angeordnet sein. Dadurch wird die von den inneren Kühlrippen aufgenommene Wärme über das Kühlfluid rasch und effizient abgeführt. Als Kühlfluid kommt sowohl eine Flüssigkeit als auch ein Gas in Frage.

Die Kühlkanäle in dem Lagerschild können mit den Kühlkanälen im Stator parallel oder seriell verbunden sein. In diesem Fall wird die Kühlung des Lagerschilds mit der Kühlung des Stators entsprechend kombiniert. Durch die Kombination kann eine gemeinsame Pumpe für die Führung des Kühlfluids verwendet werden und somit wieder Platz gespart werden.

Die Kühlkanäle in dem Lagerschild können mit den Kühlkanälen im Stator über in dem Lagerschild und dem Gehäuserohr integrierte Verbindungskanäle verbunden sein. Auf diese Weise wird eine elektrische Maschine geschaffen, welche die Verbindung der Kühlfluidkreisläufe des Lagerschilds und des Stators bereits enthält.

Alternativ dazu können die Kühlkanäle in dem Lagerschild mit den Kühlkanälen im Stator auch über Schlauch- bzw. Rohrverbindungen verbunden werden. Derartige externe Schlauch- bzw. Rohrverbindungen, welche den Kühlfluidkreislauf des Lagerschilds mit jenem des Stators verbinden sind gegenüber integrierten Verbindungskanälen im Lagerschild und dem Gehäuserohr meist kostengünstiger herstellbar und ermöglichen eine Nachrüstung bestehender elektrischer Maschinen auf das angegebene Kühlkonzept.

Der Ventilator zur Bewegung der Kühlluft innerhalb des Rotors kann gekrümmte Schaufeln aufweisen. Derartige speziell geformte Schaufeln des Ventilators bringen bei der Anwendung der elektrischen Maschine als Generator mit einem Antrieb aus einem Dieselmotor mit nur einer Drehrichtung Vorteile. Die Krümmung der Schaufeln kann sowohl in Vorwärts- als auch in Rückwärtsrichtung erfolgen.

Vorteilhafterweise sind Luftleitelemente zur Führung des Kühlluftstroms über die Lagerschilde vorgesehen. Durch derartige speziell geformte Luftleitelemente kann die Abführung der Wärme aus dem Rotor optimiert werden. Auch diese Luftleitelemente können durch nachträglich an der elektrischen Maschine angebrachte Bleche oder bereits in gusstechnisch hergestellten Teilen der elektrischen Maschine vorgesehen sein.

Wenn die Wickelköpfe der Statorwicklung mit Vergussmasse vergossen sind, kann die Wärmeabführung verbessert werden, indem eine Vergussmasse mit gegenüber Luft verbesserter thermischer Leitfähigkeit verwendet wird. Beispielsweise kann Silikon als Vergussmasse für die Wickelköpfe der Statorwicklung eingesetzt werden.

Die Erfindung wird anhand der beigefügten Abbildungen näher erläutert. Darin zeigen:
- Fig. 1: einen Längsschnitt durch eine Ausführungsform einer elektrischen Maschine;
- Fig. 2: einen Querschnitt durch die elektrischen Maschine gemäß Fig. 1 entlang der Schnittlinie II-II;
- Fig. 3: einen weiteren Querschnitt durch die elektrischen Maschine gemäß Fig. 1 entlang der Schnittlinie III-III;
- Fig. 4: ein Beispiel eines Ventilators zur Kühlung der elektrischen Maschine mit gekrümmten Schaufeln;
- Fig. 5: eine Variante der elektrischen Maschine mit interner Verbindung der Kühlfluidkreisläufe zur Kühlung des Rotors und des Stators; und
- Fig. 6: eine Variante der elektrischen Maschine mit externer Verbindung der Kühlfluidkreisläufe zur Kühlung des Rotors und des Stators.

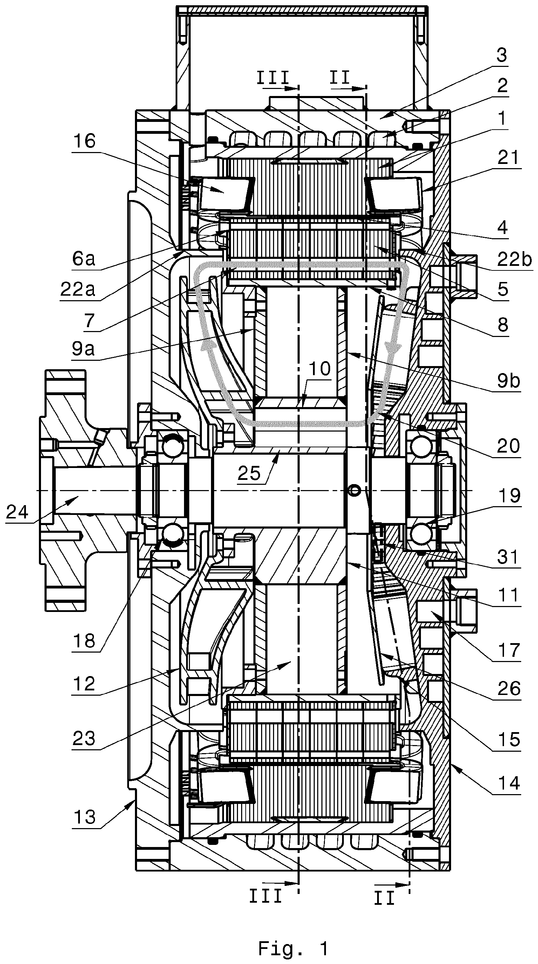

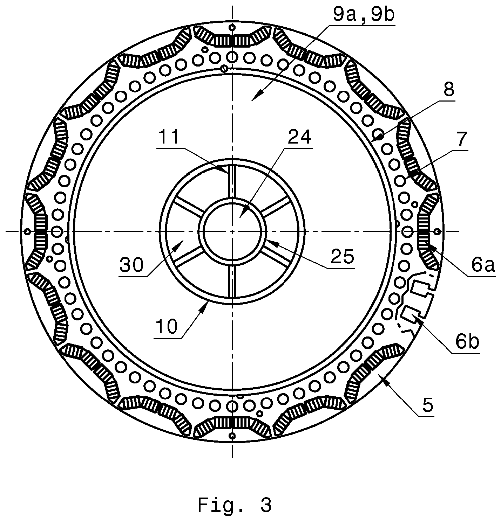

Fig. 1 zeigt einen Längsschnitt durch eine Ausführungsform einer elektrischen Maschine in Form eines Innenläufers. Die elektrische Maschine beinhaltet einen Stator mit einem Statorblechpaket 1 in dem die Statorwicklung 16 angeordnet ist. Um das Statorblechpaket 1 ist ein Gehäuserohr 3 mit Kühlkanälen 2 zur Führung eines Kühlfluids angeordnet. Zwischen Statorwicklung 1 und dem Rotorblechpaket 5 ist ein Luftspalt 4 angeordnet. Im Rotorblechpaket 5 können Permanentmagnete 6a im Falle einer permanentmagneterregten Maschine bzw. Kurzschlussstäbe 6b (siehe Fig. 3) im Falle einer Asynchronmaschine angeordnet sein. Im Rotorblechpaket 5 sind Kühlkanäle 7 zur Führung einer Kühlluft angeordnet. Beiderseits der elektrischen Maschine sind Lagerschilde 13, 14 vorgesehen, welche die entsprechenden Lager 18, 19, tragen über die die Rotorwelle 24 drehbar gelagert wird. Die Rotorwelle 24 ist über eine Rotornabe 25 verbunden, auf dem ein äußeres Rotorrohr 8 über radial angeordnete Stege 11 mit dazwischen gebildeten Öffnungen 30 verbunden ist. Zwischen Rotorwelle 24 und Rotorblechpaket 5 ist das Rotorrohr 8 von Rotorscheiben 9a, 9b und einem dazwischen angeordneten Hohlraum 23 begrenzt. Durch diese Konstruktion wird das Material und somit die Masse und das Massenträgheitsmoment des Rotors reduziert. Erfindungsgemäß ist am Rotor ein Ventilator 12 angeordnet, welcher die Kühlluft durch die Kühlkanäle 7 im Rotorblechpaket 5 bewegt und über entsprechende Rückleitungen im Rotor zurück leitet, sodass ein geschlossener Kühlluftstrom 20 gebildet wird, der über die Lagerschilde 13, 14 geführt wird und von der Kühlung des Stators unabhängig und getrennt ist. Somit wird eine Kühlung der elektrischen Maschine erzielt, welche für den Rotor und den Stator getrennt erfolgt, sodass die die thermische Auslegung des Stators und Rotors der elektrischen Maschine voneinander unabhängig erfolgen kann. In der Praxis kann es beispielsweise vorkommen, dass die Statorwicklung 16 eine höhere Temperatur (beispielsweise 270°C) als die Rotorwicklung (beispielsweise 200°C) aushält. Bei bisherigen Maschinen, bei welchen die Kühlung des Rotors nicht unabhängig von der Kühlung des Stators erfolgte, musste die gesamte Maschine auf die niedrigere Temperatur, beispielsweise die 200°C des Rotors, ausgelegt werden. Nun kann der Stator auf die höhere Temperatur von beispielsweise 270°C ausgelegt werden. In der Folge kann bei gleicher Baugröße der elektrischen Maschine eine Leistungssteigerung erzielt werden. Beispielsweise kann mit elektrischen Maschinen mit einer Kühlung nach dem Stand der Technik eine Leistung von 160 kW erreicht werden, wohingegen mit der neuartigen elektrischen Maschine 200 kW erzielbar sind. Zur optimalen Abführung der Wärme des Kühlluftstroms 20 sind an einem Lagerschild 14 Kühlrippen 15 angeordnet, über die der Kühlluftstrom 20 geführt wird. Entsprechende Kühlkanäle 17 in einem Lagerschild 14 führen die Wärme über das Kühlfluid entsprechend ab. Die Kühlkanäle 17 im Lagerschild 14 können mit den Kühlkanälen 2 im Gehäuserohr 3 der elektrischen Maschine in Serie oder parallel verbunden werden oder auch getrennt voneinander geführt werden. Über entsprechende Luftleitelemente 26 kann der Kühlluftstrom 20 zur Kühlung des Rotors optimal über die Kühlrippen 15 am Lagerschild 14 geführt werden. Die Luftleitelemente 26 können durch nachträglich aufgeschraubte oder aufgeschweißte Bleche gebildet werden oder bereits bei der Herstellung des Lagerschilds 14 berücksichtigt werden. Über einen Lagegeber bzw. Drehzahlgeber 31 kann die Winkellage bzw. die Drehzahl erfasst werden. Bei der Ansteuerung einer permanentmagneterregten Maschine ist die Messung der Winkellage des Rotors gegenüber dem Stator mithilfe eines entsprechenden Lagegebers 31 erforderlich. Bei Asynchronmotoren braucht nur die Drehzahl des Rotors mit einem entsprechenden Drehzahlgeber ermittelt werden. Die Lagegeber bzw. Drehzahlgeber können durch induktive oder kapazitive Sensoren gebildet werden.

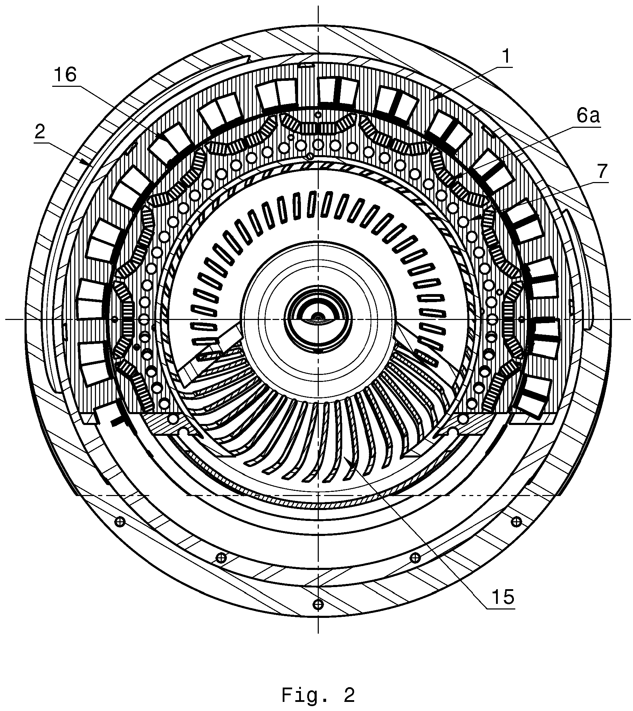

In Fig. 2 ist ein Querschnitt durch die elektrischen Maschine gemäß Fig. 1 entlang der Schnittlinie II-II dargestellt. Aus dieser Ansicht sind die Kühlrippen 15 am Lagerschild 14 deutlich erkennbar. Die Dimensionierung der Kühlrippen 15 muss an die entsprechende Wärmeabgabe angepasst werden.

Aus dem weiteren Querschnitt durch die elektrischen Maschine gemäß Fig. 1 entlang der Schnittlinie III-III gemäß Fig. 3 ist ersichtlich, dass am Rotorblechpaket 5 Permanentmagnete 6a oder Kurzschlussstäbe 6b angeordnet sein können. Die Darstellung zeigt das innere Rotorrohr 10, welches über Stege 11 mit der Rotornabe 25 verbunden ist. Zwischen den Stegen 11 werden Öffnungen 30 gebildet, welche die Rückleitungen für den Kühlluftstrom 20 bilden. Die Rotornabe 25 ist auf der Rotorwelle 24 angeordnet.

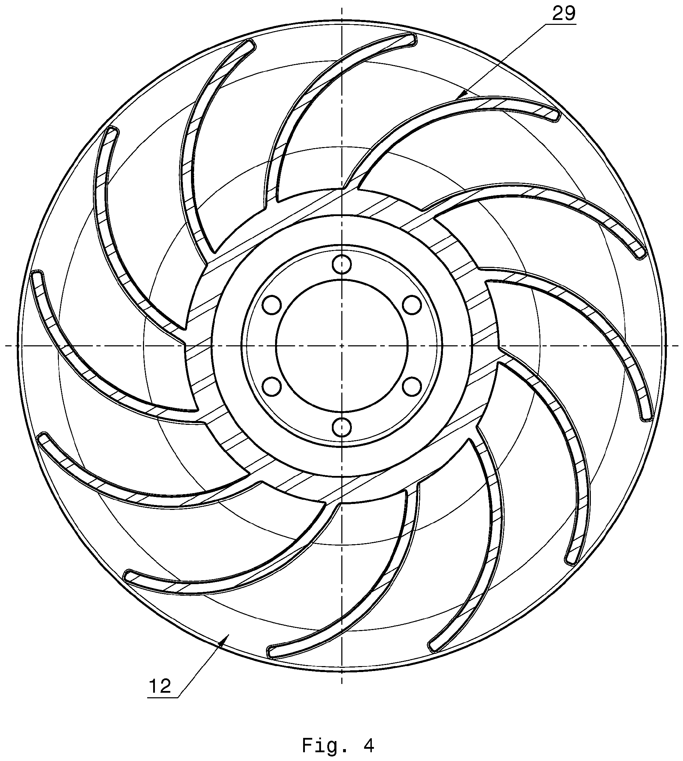

Fig. 4 zeigt ein Beispiel eines Ventilators 12 zur Kühlung der elektrischen Maschine mit gekrümmten Schaufeln 29, wodurch bei elektrischen Maschinen mit nur einer Drehrichtung beispielsweise bei der Anwendung als Generator die Effizienz gesteigert werden kann. Die Krümmung der Schaufel 29 kann sowohl in Vorwärtsrichtung als auch in Rückwärtsrichtung erfolgen.

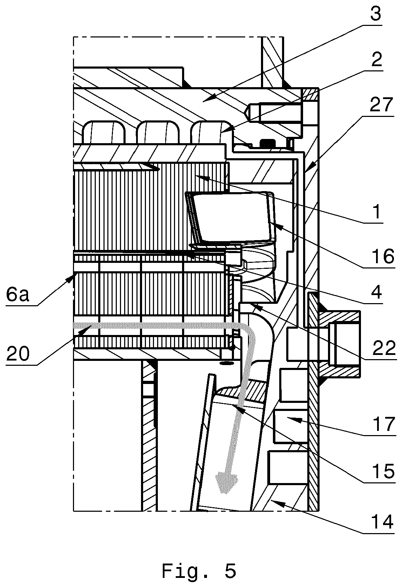

Eine Variante der elektrischen Maschine mit interner Verbindung der Kühlfluidkreisläufe zur Kühlung des Rotors und des Stators ist in Fig. 5 dargestellt. Dabei sind die Kühlkanäle 17 im Lagerschild 14 über einen integrierten Verbindungskanal 27 mit den Kühlkanälen 2 im Gehäuserohr 3 verbunden.

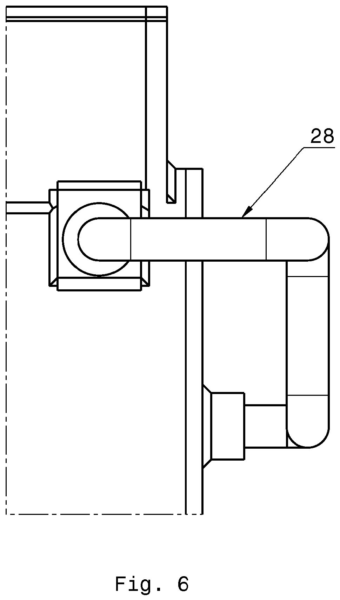

Aus Fig. 6 ist eine Variante der elektrischen Maschine mit externer Verbindung der Kühlfluidkreisläufe zur Kühlung des Rotors und des Stators ersichtlich. Dabei werden die Kühlkanäle 17 im Lagerschild 14 über eine entsprechende Schlauch- bzw. Rohrverbindung 28 mit den Kühlkanälen 2 im Gehäuserohr 3 verbunden.

## Patentansprüche

1. Gekapselte elektrische Maschine mit einem in einem Gehäuserohr (3) angeordneten Stator mit einem Statorblechpaket (1) mit einer Statorwicklung (16) und mit Kühlkanälen (2) zur Führung eines Kühlfluids, und mit einem Rotor mit einem mit einer Rotorwelle (24) drehfest verbundenen Rotorblechpaket (5) und darin angeordneten Permanentmagneten (6a) oder Kurzschlußstäben (6b), und mit beiderseits angeordneten Lagerschilden (13, 14), welche über entsprechende Lager (18, 19) mit der Rotorwelle (24) verbunden sind, wobei am Rotor ein Ventilator (12) vorgesehen ist, und im Rotorblechpaket (5) Kühlkanäle (7) angeordnet sind, welche mit entsprechenden Rückleitungen in Verbindung stehen, **dadurch gekennzeichnet, dass** zwischen der Rotorwelle (24) und dem Rotorblechpaket (5) ein von Rotorscheiben (9a, 9b) begrenztes Rotorrohr (8) mit einem Hohlraum (23) angeordnet ist, welches Rotorrohr (8) über radial angeordnete Stege (11) mit dazwischen gebildeten Öffnungen (30) mit einer auf der Rotorwelle (24) angeordneten Rotornabe (25) verbunden ist, und die Öffnungen (30) die Rückleitungen für den Kühlluftstrom (20) bilden, und Luftleitelemente (22a, 22b) zur Trennung des Kühlluftstroms (20) vom Stator vorgesehen sind, sodass getrennt von der Kühlung des Stators ein geschlossener Kühlluftstrom (20) über das Lagerschild (13, 14), welches auf der dem Ventilator (12) gegenüberliegenden axialen Seite des Rotors angeordnet ist, gebildet ist, und an der dem Rotor zugewandten Seite des Lagerschilds (14), welches auf der dem Ventilator (12) gegenüberliegenden axialen Seite des Rotors angeordnet ist, mehrere in regelmäßigen Winkelabständen zueinander angeordnete Kühlrippen (15) an der dem Rotor zugewandten Seite des Lagerschilds (14) innerhalb des Kühlluftstroms (20) angeordnet sind.

2. Elektrische Maschine nach Anspruch 1, **dadurch gekennzeichnet, dass** in zumindest einem Lagerschild (13, 14) Kühlkanäle (17) zur Führung eines Kühlfluids angeordnet sind.

3. Elektrische Maschine nach Anspruch 2, **dadurch gekennzeichnet, dass** die Kühlkanäle (17) in dem zumindest einen Lagerschild (13, 14) mit den Kühlkanälen (2) im Stator parallel oder seriell verbunden sind.

4. Elektrische Maschine nach Anspruch 3, **dadurch gekennzeichnet, dass** die Kühlkanäle (17) in dem zumindest einen Lagerschild (13, 14) mit den Kühlkanälen (2) im Stator über in den Lagerschilden (13, 14) und dem Gehäuserohr (3) integrierte Verbindungskanäle (27) verbunden sind.

5. Elektrische Maschine nach Anspruch 3, **dadurch gekennzeichnet, dass** die Kühlkanäle (17) in dem zumindest einen Lagerschild (13, 14) mit den Kühlkanälen (2) im Stator über Schlauch- bzw. Rohrverbindungen (28) verbunden sind.

6. Elektrische Maschine nach einem der Ansprüche 1 bis 5, **dadurch gekennzeichnet, dass** der Ventilator (12) gekrümmte Schaufeln (29) aufweist.

7. Elektrische Maschine nach einem der Ansprüche 1 bis 6, **dadurch gekennzeichnet, dass** Luftleitelemente (22a, 22b, 26) zur Führung des Kühlluftstroms (20) über die Lagerschilde (13, 14) vorgesehen sind.

8. Elektrische Maschine nach einem der Ansprüche 1 bis 7, **dadurch gekennzeichnet, dass** die Wickelköpfe (21) der Statorwicklung (16) mit Vergussmasse vergossen sind.

## Claims

1. Encapsulated electrical machine comprising a stator arranged in a housing tube (3), which stator has a stator core (1) with a stator winding (16) and cooling channels (2) for guiding a cooling fluid, and comprising a rotor having a laminated rotor core (5) rotatably connected to a rotor shaft (24) and permanent magnets (6a) or short-circuit rods (6b) arranged therein, and comprising end shields (13, 14) arranged on both sides, which are connected to the rotor shaft (24) via corresponding bearings (18, 19), a fan (12) being provided on the rotor, and cooling channels (7) being arranged in the laminated rotor core (5), which channels are connected to corresponding return lines, **characterised in that** a rotor tube (8) delimited by rotor discs (9a, 9b) and having a cavity (23) is arranged between the rotor shaft (24) and the laminated rotor core (5), which rotor tube (8) is connected, via radially arranged bars (11) with openings (30) formed therebetween, to a rotor hub (25) arranged on the rotor shaft (24), and the openings (30) form the return lines for the cooling air flow (20), and air guiding elements (22a, 22b) are provided for separating the cooling air flow (20) from the stator such that, separately from the cooling of the stator, a closed cooling air flow (20) is formed over the end shield (13, 14) which is arranged on the axial side of the rotor opposite the fan (12), and, on the side, facing the rotor, of the end shield (14) which is arranged on the axial side of the rotor opposite the fan (12), a plurality of cooling ribs (15) arranged at regular angular intervals from one another are arranged on the side of the end shield (14) facing the rotor within the cooling air flow (20).

2. Electrical machine according to claim 1, **characterised in that** cooling channels (17) for guiding a cooling fluid are arranged in at least one end shield (13, 14).

3. Electrical machine according to claim 2, **characterised in that** the cooling channels (17) in the at least one end shield (13, 14) are connected in parallel or in series with the cooling channels (2) in the stator.

4. Electrical machine according to claim 3, **characterised in that** the cooling channels (17) in the at least one end shield (13, 14) are connected to the cooling channels (2) in the stator via connecting channels (27) integrated in the end shields (13, 14) and the housing tube (3).

5. Electrical machine according to claim 3, **characterised in that** the cooling channels (17) in the at least one end shield (13, 14) are connected to the cooling channels (2) in the stator via hose or tube connections (28).

6. Electrical machine according to any of claims 1 to 5, **characterised in that** the fan (12) has curved blades (29).

7. Electrical machine according to any of claims 1 to 6, **characterised in that** air guiding elements (22a, 22b, 26) are provided for guiding the cooling air flow (20) over the end shields (13, 14).

8. Electrical machine according to any of claims 1 to 7, **characterised in that** the winding heads (21) of the stator winding (16) are cast with casting compound.

## Revendications

1. Machine électrique blindée comprenant un stator disposé dans un tube de carter (3) comprenant un paquet de tôles de stator (1) comprenant un enroulement statorique (16) et comprenant des canaux de refroidissement (2) destinés à guider un fluide de refroidissement, et comprenant un rotor comprenant un paquet de tôles de rotor (5) relié de manière solidaire en rotation à un arbre de rotor (24) ainsi que des aimants permanents (6a) ou des barres de court-circuit (6b) disposés dans celui-ci, et comprenant des flasques (13, 14) disposés de part et d'autre, lesquels sont reliés à l'arbre de rotor (24) par des paliers correspondants (18, 19), dans laquelle un ventilateur (12) est prévu au niveau du rotor, et des canaux de refroidissement (7) sont agencés dans le paquet de tôles de rotor (5), lesquels canaux sont reliés à des conduites de retour correspondantes, **caractérisée en ce qu'**un tube de rotor (8) délimité par des disques de rotor (9a, 9b) et comportant une cavité (23) est disposé entre l'arbre de rotor (24) et le paquet de tôles de rotor (5), lequel tube de rotor (8) est relié à un moyeu de rotor (25) disposé sur l'arbre de rotor (24) par l'intermédiaire d'éléments de liaison (11) disposés radialement et formant des ouvertures (30) entre eux, et les ouvertures (30) forment les conduites de retour pour le flux d'air de refroidissement (20), et des éléments de guidage d'air (22a, 22b) sont prévus pour séparer le flux d'air de refroidissement (20) du stator, de sorte qu'un flux d'air de refroidissement (20) en circuit fermé est séparé du refroidissement du stator par l'intermédiaire du flasque (13, 14), lequel est disposé sur le côté axial du rotor opposé au ventilateur (12), et sur le côté du flasque (14) tourné vers le rotor, lequel flasque est disposé sur le côté axial du rotor opposé au ventilateur (12), une pluralité d'ailettes de refroidissement (15) espacées les unes des autres à des distances angulaires régulières sont disposées sur le côté du flasque (14) tourné vers le rotor à l'intérieur du flux d'air de refroidissement (20).

2. Machine électrique selon la revendication 1, **caractérisée en ce que** des canaux de refroidissement (17) destinés à guider un fluide de refroidissement sont ménagés dans au moins un flasque (13, 14).

3. Machine électrique selon la revendication 2, **caractérisée en ce que** les canaux de refroidissement (17) ménagés dans le ou les flasques (13, 14) sont reliés en parallèle ou en série aux canaux de refroidissement (2) situés dans le stator.

4. Machine électrique selon la revendication 3, **caractérisée en ce que** les canaux de refroidissement (17) ménagés dans le ou les flasques (13, 14) sont reliés aux canaux de refroidissement (2) situés dans le stator par l'intermédiaire de canaux de liaison (27) intégrés dans les flasques (13, 14) et le tube de carter (3).

5. Machine électrique selon la revendication 3, **caractérisée en ce que** les canaux de refroidissement (17) ménagés dans le ou les flasques (13, 14) sont reliés aux canaux de refroidissement (2) situés dans le stator par l'intermédiaire de tuyaux ou tubes de liaison (28).

6. Machine électrique selon l'une des revendications 1 à 5, **caractérisée en ce que** le ventilateur (12) possède des pales incurvées (29).

7. Machine électrique selon l'une des revendications 1 à 6, **caractérisée en ce que** des éléments de guidage d'air (22a, 22b, 26) sont prévus pour guider le flux d'air de refroidissement (20) sur les flasques (13, 14).

8. Machine électrique selon l'une des revendications 1 à 7, **caractérisée en ce que** les têtes de bobine (21) de l'enroulement statorique (16) sont scellées avec une masse de scellement.
